# FASCICULE DE BREVET EUROPEEN

(11) **EP 1 751 615 B1**
(45) Date de publication et mention de la délivrance du brevet: **27.08.2014**
(21) Numéro de dépôt: 05762549.3
(22) Date de dépôt: 13.05.2005
(51) Int. Cl.: G02F 1/13357

(54) **DISPOSITIF D'AFFICHAGE COULEUR A UNITE DE RETRO-ECLAIRAGE PAR DIODES ELECTROLUMINESCENTES ORGANIQUES ET PROCEDE DE MISE EN OEUVRE**
FARBANZEIGEVORRICHTUNG MIT RÜCKBELEUCHTUNGSEINHEIT MIT ORGANISCHER LEUCHTDIODE UND VERFAHREN ZUR IMPLEMENTIERUNG
COLOUR DISPLAY DEVICE COMPRISING AN ORGANIC LIGHT-EMITTING DIODE BACKLIGHTING UNIT AND METHOD OF IMPLEMENTING SAME

(30) Priorité: 17.05.2004 FR 0450952
(43) Date de publication de la demande: 14.02.2007
(73) Titulaire: Thomson Licensing, 92130 Issy-les-Moulineaux (FR)
(72) Inventeur: LE ROY, Philippe, F-35830 BETTON (FR); DRAZIC, Valter, F-35830 BETTON (FR); DAGOIS, Jean-Paul, F-35510 CESSON SEVIGNE (FR)
(74) Mandataire: Catherine, Alain
(86) Numéro de dépôt international: PCT/FR2005/050321
(87) Numéro de publication internationale: WO 2005/114311

(56) Documents cités:
- EP-A- 1 380 876
- WO-A-99/66483
- JP-A- H0 980 434
- US-A- 5 598 281
- US-A- 5 796 509
- US-A- 6 111 560

## Description

La présente invention concerne un dispositif d'affichage couleur à unité de rétro-éclairage par diodes électroluminescentes organiques ainsi qu'un procédé de mise en oeuvre dudit dispositif d'affichage. Elle a des applications dans le domaine des afficheurs à commande électrique ou électronique dans lesquels un ou des faisceaux lumineux produits par une ou des sources de lumière sont optiquement commutés par pixels afin de contrôler l'affichage de la lumière. Elle peut plus particulièrement être appliquée aux afficheurs à cristaux liquides (LCD) ou à commutation optique par micro-effecteurs (MEMS).

Les afficheurs mettant en oeuvre des ensembles de commutation électro-optique (ou modulateurs électro-optiques, ces termes étant équivalents), notamment à cristaux liquides (LCD), connaissent un développement important. Afin de permettre leur utilisation quelles que soient les conditions d'éclairage ambiant, il est nécessaire de disposer d'une source lumineuse sur laquelle peut agir l'ensemble de commutation électro-optique. C'est ainsi que dans le cas des afficheurs couleur LCD, on a proposé d'éclairer par l'arrière (par rapport à un observateur qui se trouve à l'avant de l'afficheur) l'ensemble de commutation LCD avec un/des tubes d'éclairage à cathode froide. Outre que leur mise en oeuvre est complexe du fait de la haute tension nécessaire à leur fonctionnement, de la nécessité d'avoir une répartition uniforme de l'éclairage, ils sont fragiles, ont une durée de vie réduite (leurs caractéristiques se dégradent progressivement) et sont gourmands en énergie. De plus, produisant une couleur blanche, des dispositifs de filtrage optiques additionnels sont nécessaires afin de pouvoir reproduire l'ensemble du spectre de couleur visible sur l'afficheur.

On a donc essayé de trouver d'autres techniques pour produire un rétro-éclairage. C'est ainsi qu'après utilisation des diodes électroluminescentes, on a proposé la mise en oeuvre de diodes électroluminescentes organiques (OLED). Cette dernière technologie qui permet de produire trois couleurs de base du spectre, le rouge, le vert et le bleu, (RVB) individuellement, et qui peut être directement mise en oeuvre à l'arrière de l'ensemble de commutation électro-optique LCD contrairement aux technologies de type tube à cathode froide, permet de simplifier la réalisation de tels afficheurs.

Toutefois cette dernière technologie souffre encore de quelques limitations. En effet dans les dispositifs connus de rétro-éclairage à diodes OLED, les trois sources lumineuses RVB sont superposées (empilées) ce qui nécessite de les allumer séquentiellement au cours du temps. La persistance rétinienne de l'observateur permet la recombinaison des couleurs sélectionnées et la reproduction du spectre visible. Du fait de l'allumage séquentiel, des pertes de commutation se produisent. Elles sont d'autant plus élevées que les capacités à commuter sont importantes du fait de la très faible épaisseur des couches au sein du matériau électroluminescent organique. La superposition des sources conduit également à des pertes d'intensité lumineuse.

A titre alternatif, on a proposé dans US-6.111.560 de mettre en oeuvre des rangées de sources lumineuses en ligne chacune d'une largeur telle que plusieurs lignes de l'ensemble de commutation LCD pouvaient agir sur la lumière produite par une ligne lumineuse de la source. Enfin, dans US-5.796.509, on a proposé de mettre en oeuvre un moyen d'éclairage à diodes électroluminescentes organiques combiné à un modulateur optique spatial du type LCD. On y décrit des afficheurs couleur dans lesquels les diodes OLED produisent une lumière blanche et des filtres de couleurs sont employés ou des diodes OLED de couleur sont employées.

D'autres documents US2003/0030371, EP 1018718 et WO99/66483 décrivent des dispositifs d'affichage couleur dotés de cette technologie de rétro-éclairage. Enfin, le document US-5.598.281 présente des éléments optiques pour afficheurs.

Ces différentes solutions présentent encore des limitations, notamment concernant la précision du rendu optique ou la complexité de mise en oeuvre et la présente invention propose de résoudre, entre-autre, de tels problèmes. Ainsi l'invention concerne un dispositif d'affichage couleur selon la revendication 1.

Dans divers modes de mise en oeuvre de l'invention, les moyens suivants pouvant être utilisés seuls ou selon toutes les combinaisons techniquement envisageables, sont employés :
- l'ensemble de commutation électro-optique comporte vers l'avant et l'observateur un élément diffuseur sensiblement plan, l'élément diffuseur et la surface rassemblant les lignes de l'unité de rétro-éclairage, qui est sensiblement plane, sont optiquement conjugués à travers lesdites lentilles,
- les lentilles cylindriques présentent une convexité orientée vers l'avant et l'ensemble de commutation,
- les lentilles cylindriques sont séparées entre elles latéralement sur la longueur par des séparateurs optiques afin que l'éclairage d'une ligne lumineuse ne puisse interférer avec des pixels d'autres lignes,
- les séparateurs optiques sont des absorbeurs optiques destinés à absorber la lumière d'une ligne lumineuse qui ne parvient pas sur la lentille cylindrique correspondant à la ligne,
- les lentilles cylindriques sont accolées à l'ensemble de commutation optique,
- les lentilles cylindriques sont séparées par un espace d'air de l'ensemble de commutation optique,
- les lentilles cylindriques sont réalisées dans une matière plastique, comme le polyméthylméthacrylate (PMMA), le polycarbonate ou le polyacrylique,
- l'ensemble de commutation électro-optique est à matrice active,
- l'ensemble de commutation électro-optique est du type à cristaux liquides (LCD),
- l'ensemble de commutation électro-optique est du type micromécanique (MEMS),
- l'unité de rétro-éclairage est d'un type choisi entre anode commune et cathode commune et de préférence de type cathode commune,
- l'électrode transparente ou semi-transparente comprend une couche d'oxyde d'indium-étain (ITO),
- l'électrode transparente ou semi-transparente comprend une couche de chrome, (pour palier la faible conductivité de l'ITO)
- l'électrode à l'arrière de l'unité de rétro-éclairage résulte d'un dépôt d'un métal choisi parmi l'aluminium, l'argent, l'or, le chrome ou le magnésium,
- les pixels de l'ensemble de commutation optique sont alignés par colonne, les colonnes étant parallèles aux lignes lumineuses,
- pour l'unité de rétro-éclairage, la largeur d'une ligne lumineuse est d'environ 12,5 micromètres,
- pour les lentilles cylindriques l'épaisseur au maximum d'épaisseur de la lentille est d'environ 0,2 mm avec un rayon de courbure de -0,088395 mm et une conicité de -0,2056, les absorbeurs optiques étant configurés pour absorber les rayons lumineux latéraux émis par la ligne lumineuse en dehors d'un cône d'environ +/-14 degrés par rapport à un plan médian d'émission de la ligne lumineuse vers l'avant,
- pour un ensemble de commutation du type à cristaux liquides, la largeur de pixel est d'environ 0,1 mm, le cristal liquide étant pris entre deux plaques d'environ 0,7 mm d'épaisseur chacune,
- le groupe comporte trois lignes lumineuses, les trois couleurs de base sont le bleu, le vert et le rouge.

L'invention concerne également un procédé de mise en oeuvre selon la revendication 9.

Selon diverses modalités opérationnelles, on considère le procédé précédent avec une ou plusieurs des caractéristiques suivantes :
- on met en oeuvre un ensemble de commutation électro-optique à matrice active,
- on ajuste la balance des blancs par contrôle de la quantité de lumière traversant les pixels de l'ensemble de commutation électro-optique,
- on ajuste la balance des blancs par contrôle des intensités lumineuses respectives des couleurs de base produites par les lignes lumineuses et par contrôle de la quantité de lumière traversant les pixels de l'ensemble de commutation optique.

Entre autres avantages, la présente invention permet un réglage de la balance des blancs relativement simple et évite d'avoir à mettre en oeuvre des filtres de couleurs en amont (ou aval) de l'ensemble de commutation électro-optique.

La présente invention va maintenant être exemplifiée sans pour autant en être limitée avec la description qui suit en relation avec les figures suivantes :
la Figure 1 qui représente schématiquement vu de dessus une unité de rétro-éclairage qui n'est pas selon l'invention, et
la Figure 2 qui représente la mise en oeuvre fonctionnelle schématique de l'unité de rétro-éclairage au sein d'un afficheur d'un type à cristaux liquides (LCD).

L'unité de rétro-éclairage 1 à diodes électroluminescentes organiques (OLED) est une structure sensiblement plane et carrée ou rectangulaire formée d'un empilement de matériaux adaptés à la génération de lumière sous l'action d'un courant électrique. Pour réaliser une telle unité, on peut utiliser les techniques traditionnelles de fabrication des diodes OLED. A titre d'exemple, une diode OLED peut comporter un substrat sur lequel une première électrode est déposée, surmontée d'une couche de matériau électroluminescent organique, elle-même surmontée d'une seconde couche d'électrodes. Des sous couches peuvent être réalisées dans la couche de matériau électroluminescent organique afin de favoriser la conversion électro-lumineuse. Suivant des modalités de fabrication, l'émission de la diode OLED peut s'effectuer par l'arrière (par le substrat) ou par l'avant (à travers la seconde électrode). De plus suivant le genre des électrodes, anode ou cathode, on peut avoir une anode avant ou inversement. Les électrodes qui doivent laisser passer la lumière produite dans la diode OLED, classiquement les anodes, sont généralement des dépôts fins d'oxyde d'indium-étain (ITO) dont on peut améliorer les caractéristiques électriques, notamment réduction de la résistance surfacique, par dépôt de chrome.

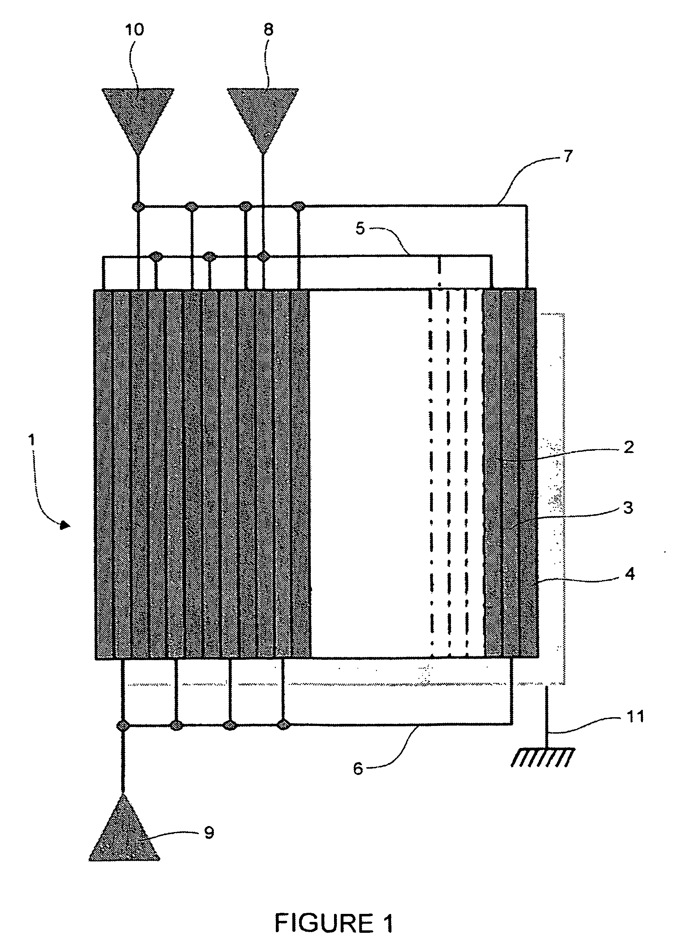

L'unité de rétro-éclairage telle que vue schématiquement de dessus sur la Figure 1, du type à émission par l'avant et cathode commune arrière, présente toutefois une disposition particulière du fait d'une répétition périodique régulière d'un motif élémentaire de trois lignes lumineuses de diodes OLED parallèles entre elles et adjacentes, chacune d'une couleur de base, rouge 2, vert 3 et bleu 4, sur la surface sensiblement macroscopiquement plane de l'unité. Chacune des lignes de couleur de base d'un motif élémentaire possède sa propre électrode au moins sur une face de l'unité, ici une anode avant et formant l'électrode de ligne, l'autre face de l'unité ayant une électrode commune à l'ensemble des lignes lumineuses, ici une cathode commune 11 arrière.

Les électrodes, ici anodes avant, des différentes lignes d'une même couleur de base, dites électrodes de ligne, sont réunies ensembles le long d'une extrémité de l'unité 1, pour le rouge sur la liaison 5, pour le vert sur la liaison 6 et pour le bleu sur la liaison 7. Chacune des liaisons est reliée à une connexion ou broche de commande couleur (pour la couleur de base considérée), respectivement 8, 9 et 10 destinée à être reliée à des circuits électroniques de commande d'allumage externes non représentés. Il est ainsi possible d'allumer l'ensemble des lignes OLED d'une même couleur de base. On peut également, comme préféré pour mise en oeuvre de l'unité de rétro-éclairage, allumer simultanément l'ensemble des lignes OLED, c'est-à-dire les trois couleurs de base ensemble. On remarque sur la figure 1 qui n'est pas selon l'invention qu'étant donné qu'il y à trois couleurs de base et donc trois liaisons 5, 6, 7, on a réparti de part et d'autre des extrémités de lignes lumineuses lesdites liaisons, une à une extrémité et deux à l'autre extrémité. Une telle disposition simplifie la réalisation des liaisons puisqu'il ne faut qu'une couche isolante entre les deux liaisons par rapport à une disposition où les trois liaisons seraient du même coté.

Selon l'invention, trois liaisons sont réalisées aux deux extrémités avec leurs connexions/broches respectives afin de réduire la résistance des circuits, alimenter les électrodes aux deux extrémités des lignes et avoir une meilleure homogénéité de l'émission lumineuse. En effet, les électrodes doivent être fines pour laisse passer la lumière générée dans les diodes OLED, d'où résistance élevée et chute de tension le long de la ligne lumineuse pouvant provoquer une diminution de l'émission lumineuse vers une extrémité non connectée de la ligne lumineuse par rapport à l'extrémité connectée. Le dispositif comporte alors une paire de connexions de commande anode par couleur de base, la première connexion de la paire étant à une première extrémité des lignes lumineuses de la couleur de base correspondante et la seconde connexion de la paire étant à une seconde extrémité des lignes lumineuses de la couleur de base correspondante, la seconde extrémité étant à l'opposé de la première extrémité, les anodes des lignes lumineuses d'une même couleur de base étant reliées entre elles aux deux extrémités des lignes lumineuses.

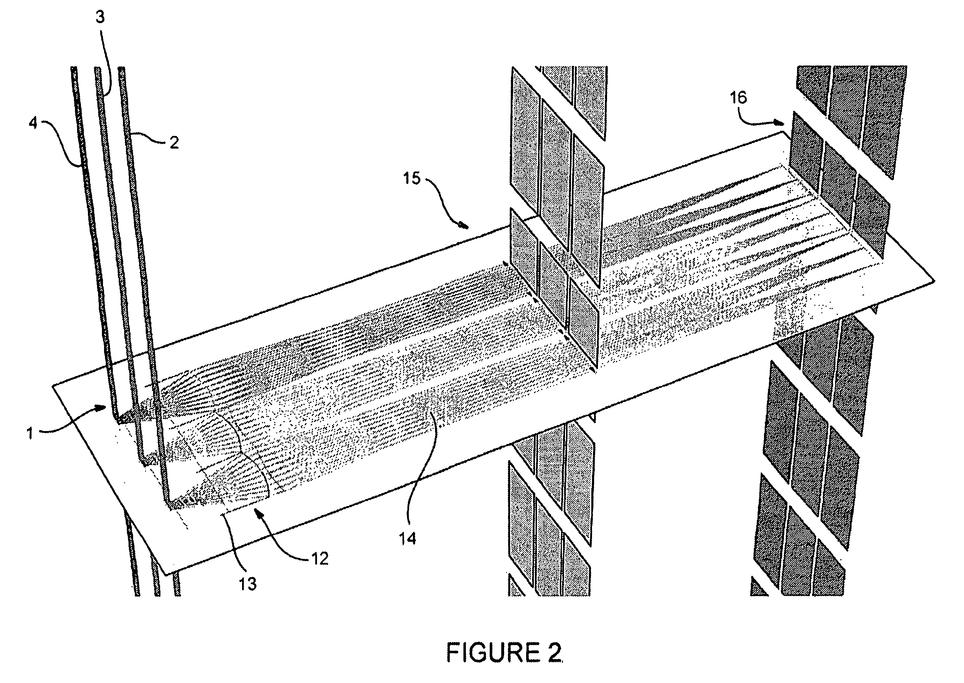

Sur l'unité telle que décrite précédemment on a disposé un ensemble de lentilles cylindriques 12 allongées, une par ligne lumineuse 2, 3, 4 que l'on voit mieux sur la Figure 2 du fonctionnement schématique d'un afficheur selon l'invention. La face convexe des lentilles est orientée vers le haut, à l'opposé des lignes lumineuses. Chaque lentille est destinée à former un faisceau lumineux d'une couleur de base donnée à bords sensiblement parallèles vers l'avant.

Entre les lentilles, le long de leurs bords latéraux communs (et en bordure de l'unité de rétro-éclairage), on a disposé des séparateurs optiques 13 afin que l'éclairage d'une ligne lumineuse ne puisse pas interférer avec celles des autres lignes lumineuses. Les séparateurs optiques sont de préférence des absorbeurs optiques destinés à absorber la lumière d'une ligne lumineuse qui ne parvient pas sur la lentille cylindrique allongée correspondant à la ligne.

L'effet des lentilles cylindriques allongées est maintenant expliqué en relation avec la Figure 2 où une unité de rétro-éclairage 1 est disposée dans un afficheur à l'arrière d'un ensemble de commutation électro-optique 15 de pixels du type à cristaux liquides (LCD). Pour simplifier, on a représenté seulement trois lignes lumineuses d'un motif élémentaire de trois couleurs de base, rouge, vert et bleu et la disposition des rayons lumineux sur un plan de coupe transversal. Les lignes lumineuses 2, 3, 4, les lentilles cylindriques 12 et les pixels du commutateur LCD 15 sont alignés afin qu'un pixel donné ne commande qu'une couleur de base donnée. Des rayons lumineux produits par les lignes lumineuses à diodes OLED, seuls ceux atteignant les lentilles cylindriques sont envoyés sous forme de faisceaux lumineux 14 à bords sensiblement parallèles à travers les pixels du commutateur LCD, vers l'avant, pour former des motifs 16 (visibles ou non selon l'état de la commande du/des pixels et des lignes lumineuses). De préférence, les lentilles cylindriques ne sont pas accolées à la face arrière de l'ensemble de commutation LCD afin de laisser un espace d'air dont l'indice optique permet une courbure adéquate des rayons en sortie des lentilles cylindriques. Dans une variante dans laquelle on cherche une précision optimale, on pourra tenir compte de la longueur d'onde de la couleur de base pour le calcul de la lentille cylindrique correspondante afin d'avoir pour les trois couleurs de base des mêmes effets optiques et éviter un éventuel astigmatisme des couleurs.

Toujours en relation avec la Figure 2, on remarque que les pixels de l'ensemble de commutation optique sont alignés en colonnes parallèles aux lignes lumineuses de l'unité de rétro-éclairage et que chaque faisceau lumineux 14 d'une couleur de base n'est en relation qu'avec une seule colonne de pixels de l'ensemble de commutation optique. Grâce à l'action des lentilles cylindriques, chacune disposée sur une ligne lumineuse, et permettant de produire un faisceau à bords sensiblement parallèles à travers l'ensemble de commutation, une colonne de pixels ne peut agir que sur sa couleur de base correspondante produite par la ligne correspondante de l'unité de rétro-éclairage. On a ainsi l'équivalent d'un éclairage de Köhler et toute la lumière d'une couleur de base donnée collectée par une lentille cylindrique ne passe que par la colonne de pixel correspondante de l'ensemble de commutation et ne déborde pas sur les autres colonnes de pixels.

Dans un afficheur typique selon l'invention, la largeur d'une ligne lumineuse est d'environ 12,5 micromètres pour l'unité de rétro-éclairage et les lentilles cylindriques allongées ont une épaisseur au maximum d'épaisseur de la lentille d'environ 0,2 mm, rayon de courbure de -0,088395 mm et conicité de -0,2056. Les absorbeurs optiques sont configurés pour absorber les rayons lumineux latéraux émis par la ligne lumineuse latéralement en dehors d'un cône d'environ +/-14 degrés par rapport à un plan médian d'émission de la ligne lumineuse vers l'avant. Enfin, l'ensemble de commutation du type à cristaux liquides a une largeur de pixel d'environ 0,1 mm, le cristal liquide étant pris entre deux plaques de verre d'environ 0,7 mm d'épaisseur chacune, qui supportent, à l'opposé de la couche de cristaux liquides, des couches de polarisation, qui forment un polariseur et un analyseur croisés. De préférence, l'une des plaques de verre intègre une matrice active apportant un effet mémoire à chaque pixel ou cellule de cristal liquide ; à cet effet, cette plaque de verre comporte par exemple, au niveau de chaque pixel, une zone recouverte de silicium amorphe dans laquelle est gravée un circuit de pixel connu en lui-même et adapté à l'obtention de l'effet mémoire.

Si les lentilles cylindriques et séparateurs optiques agissent sur des rayons lumineux produits dans des directions latérales (perpendiculaires) aux lignes lumineuses, on peut noter que pour les rayons produits dans des directions comprises dans le plan médian normal de la ligne lumineuse, la lumière produite n'a pas besoin d'être contrôlée (redirigée ou absorbée) et que toute lumière à +/- 90 degrés de la normale peut être utilisée.

Comme on l'a indiqué, en fonctionnement on allume de préférence l'ensemble des lignes lumineuses, c'est-à-dire les trois couleurs de base, en ajustant toutefois le niveau de chaque couleur de base afin de former un blanc de qualité (balance des blancs).

Dans une variante dans laquelle on recherche une meilleure uniformité du blanc sur l'ensemble de la surface de l'unité de rétro-éclairage, on pourra diviser la surface de l'unité en zones commandées individuellement de trois couleurs de base regroupant un certain nombre de motifs élémentaires adjacents de trois couleurs de base et avec au moins trois broches par zone.

On comprend que les quelques exemples de réalisation donnés ci-dessus sont indicatifs et que l'homme du métier peut en réaliser d'autres sans sortir du cadre de l'invention telle que définie par les revendications. En particulier l'unité de rétro-éclairage peut en outre comporter des circuits électroniques de commande et de contrôle qui sont intégrés et permettent notamment de la commander par une liaison série ou parallèle. La commande dans le cas le plus simple peut être analogique. Au cas où des circuits électroniques logiques (voire microcontrôleur) seraient mis en oeuvre par intégration dans l'unité de rétro-éclairage, la commande pourra être numérique (logique). Enfin, on envisage dans une version évoluée, des moyens de contrôle en boucle fermée avec un ou plusieurs capteurs optiques mesurant l'émission lumineuse de l'unité de rétro-éclairage pour maintien à un niveau prédéterminé, éventuellement modifiable par commande extérieure.

## Revendications

1. Dispositif d'affichage couleur comportant d'arrière en avant vers un observateur, une unité de rétro-éclairage (1) multicolore par diodes électroluminescentes organiques OLED, un ensemble de commutation électro-optique (15) par pixels commutant le rétro-éclairage fourni par l'unité de rétro-éclairage (1), l'unité de rétro-éclairage (1) étant une surface comportant un motif périodique d'un groupe d'au moins trois lignes lumineuses (2, 3, 4) de diodes électroluminescentes organiques OLED de couleurs de base différentes, adjacentes et parallèles entre-elles, et
dans lequel les pixels de l'ensemble de commutation électro-optique (15) destinés à commuter une même couleur de base et les lignes lumineuses (2, 3, 4) de l'unité de rétro-éclairage (1) de ladite même couleur de base sont sensiblement alignés afin qu'un pixel quelconque donné permette de contrôler la transmission vers l'avant de la seule couleur de base correspondante, et
dans lequel une lentille cylindrique (12) est disposée le long de chaque ligne lumineuse (2, 3, 4) sur l'unité de rétro-éclairage afin de former un faisceau lumineux à bords sensiblement parallèle (14) vers l'avant et à travers l'ensemble de commutation électro-optique (15) pour la couleur de base de la ligne lumineuse (2, 3, 4) correspondante, la lentille cylindrique (12) étant d'une longueur sensiblement égale à la longueur de la ligne lumineuse (2, 3, 4), dans lequel les lignes lumineuses (2, 3, 4) de diodes électroluminescentes organiques OLED comportent vers l'avant une électrode transparente ou semi-transparente d'un premier genre traversée par la lumière produite et vers l'arrière une électrode 'd'un second genre (11), les genres d'électrode correspondant à anode et cathode, et
dans lequel les électrodes de l'un des genres des lignes lumineuses (2, 3, 4) d'une même couleur de base, dites électrodes de ligne, sont reliées entre elles (5, 6, 7) et à au moins une paire de connexions (8, 9, 10) de commande couleur pour la couleur de base correspondante, et
dans lequel les électrodes de l'autre genre pour l'ensemble des lignes lumineuses (2, 3, 4) sont reliées ensembles en formant une électrode commune et à au moins une connexion de commande commune, et
dans lequel le dispositif comporte ladite au moins une paire de connexions de commande couleur par couleur de base, la première connexion de commande couleur de la paire étant à une première extrémité des électrodes de ligne de la couleur de base correspondante et la seconde connexion de commande couleur de la paire étant à une seconde extrémité des mêmes électrodes de ligne de la couleur de base correspondante, la seconde extrémité étant à l'opposé de la première extrémité le long des lignes lumineuses, les électrodes de ligne d'une même couleur de base étant reliées entre elles à chacune des deux extrémités des lignes lumineuses (2, 3, 4).

2. Dispositif selon la revendication 1, **caractérisé en ce qu'**il comporte vers l'avant de l'ensemble de commutation électro-optique (15) et vers l'observateur un élément diffuseur sensiblement plan et **en ce que** l'élément diffuseur et la surface rassemblant les lignes lumineuses (2, 3, 4) de l'unité de rétro-éclairage (1), qui est sensiblement plane, sont optiquement conjugués à travers lesdites lentilles cylindriques (12).

3. Dispositif selon la revendication 1 ou 2 **caractérisé en ce que** l'ensemble de commutation électro-optique (15) est à matrice active.

4. Dispositif selon l'une quelconque des revendications précédentes, **caractérisé en ce que** les lentilles cylindriques (12) sont séparées entre elles latéralement sur la longueur par des séparateurs optiques (13) afin que l'éclairage d'une ligne lumineuse (2, 3, 4) n e puisse interférer avec des pixels d'autres lignes lumineuses.

5. Dispositif selon l'une quelconque des revendications précédentes, **caractérisé en ce que** les lentilles cylindriques (12) sont accolées à l'ensemble de commutation optique (15).

6. Dispositif selon l'une quelconque des revendications 1 à 4, **caractérisé en ce que** les lentilles cylindriques (12) sont séparées par un espace d'air de l'ensemble de commutation optique (15).

7. Dispositif selon l'une quelconque des revendications précédentes, **caractérisé en ce que** l'électrode transparente ou semi-transparente comprend une couche d'oxyde d'indium-étain (ITO).

8. Dispositif selon la revendication 7, **caractérisé en ce que** l'électrode transparente ou semi-transparente comprend une couche de chrome.

9. Procédé de mise en oeuvre d'un dispositif selon l'une quelconque des revendications 1 à 8 selon lequel la couleur d'affichage pour l'observateur est commandée par l'ensemble de commutation électro-optique (15) et selon lequel au moins trois lignes lumineuses (2, 3, 4) du groupe permettant de produire par combinaison optique pour un observateur une couleur blanche, on allume simultanément lesdites au moins trois lignes lumineuses (2, 3, 4) et on ajuste la balance des blancs au moins par contrôle des intensités lumineuses respectives des couleurs de base produites simultanément par les lignes lumineuses (2, 3, 4).

## Patentansprüche

1. Farbanzeigevorrichtung, umfassend von hinten nach vorne in Richtung auf einen Betrachter eine mehrfarbige Rückbeleuchtungseinheit (1) durch organische Leuchtdioden OLED, eine elektrooptische Pixelschaltanordnung (15), welche die Rückbeleuchtung umschaltet, die von der Rückbeleuchtungseinheit (1) geliefert wird, wobei die Rückbeleuchtungseinheit (1) eine Oberfläche ist, die ein periodisches Motiv einer Gruppe von mindestens drei Leuchtreihen (2, 3, 4) aus aneinander angrenzenden und parallelen organischen Leuchtdioden OLED mit unterschiedlichen Grundfarben umfasst, und
wobei die Pixel der elektrooptischen Schaltanordnung (15) dazu gedacht sind, ein und dieselbe Grundfarbe umzuschalten, und die Leuchtreihen (2, 3, 4) der Rückbeleuchtungseinheit (1) derselben Grundfarbe im Wesentlichen ausgerichtet sind, damit es ein beliebiges Pixel ermöglicht, die Übertragung der einzigen entsprechenden Grundfarbe nach vorne zu steuern, und
wobei eine Zylinderlinse (12) entlang jeder Leuchtreihe (2, 3, 4) auf der Rückbeleuchtungseinheit angeordnet ist, um einen Lichtstrahl mit im Wesentlichen parallelen Rändern (14) nach vorne und durch die elektrooptische Schaltanordnung (15) für die Grundfarbe der entsprechenden Leuchtreihe (2, 3, 4) zu bilden, wobei die Zylinderlinse (12) eine Länge aufweist, die im Wesentlichen gleich der Länge der Leuchtreihe (2, 3, 4) ist,
wobei die Leuchtreihen (2, 3, 4) aus organischen Leuchtdioden OLED nach vorne eine transparente oder halbtransparente Elektrode einer ersten Art umfassen, durch die das erzeugte Licht geht, und nach hinten eine Elektrode einer zweiten Art (11) umfassen, wobei die Elektrodenarten Anode und Kathode entsprechen, und
wobei die Elektroden der einen der Arten der Leuchtreihen (2, 3, 4) ein und derselben Grundfarbe, die so genannten Reihenelektroden, miteinander (5, 6, 7) und mit mindestens einem Paar Farbsteueranschlüssen (8, 9, 10) für die entsprechende Grundfarbe verbunden sind, und
wobei die Elektroden der anderen Art für die Anordnung der Leuchtreihen (2, 3, 4) miteinander verbunden sind, indem sie eine gemeinsame Elektrode bilden, und mit mindestens einem gemeinsamen Steueranschluss verbunden sind, und
wobei die Vorrichtung das mindestens eine Paar von Farbsteueranschlüssen pro Grundfarbe umfasst, wobei der erste Farbsteueranschluss des Paars an einem ersten Ende der Reihenelektroden der entsprechenden Grundfarbe erfolgt und der zweite Farbsteueranschluss des Paars an einem zweiten Ende der gleichen Reihenelektroden der entsprechenden Grundfarbe erfolgt, wobei sich das zweite Ende dem ersten Ende gegenüber entlang der Leuchtreihen befindet, wobei die Reihenelektroden ein und derselben Grundfarbe an jedem der beiden Enden der Leuchtreihen (2, 3, 4) miteinander verbunden sind.

2. Vorrichtung nach Anspruch 1, **dadurch gekennzeichnet, dass** sie zum Vorderteil der elektrooptischen Schaltanordnung (15) und zum Betrachter hin ein im Wesentlichen ebenes Streuelement umfasst, und dass das Streuelement und die Oberfläche, welche die Leuchtreihen (2, 3, 4) der Rückbeleuchtungseinheit (1) zusammenfasst und im Wesentlichen eben ist, einander optisch durch die Zylinderlinsen (12) zugeordnet sind.

3. Vorrichtung nach Anspruch 1 oder 2, **dadurch gekennzeichnet, dass** die elektrooptische Schaltanordnung (15) eine aktive Matrix ist.

4. Vorrichtung nach einem der vorhergehenden Ansprüche, **dadurch gekennzeichnet, dass** die Zylinderlinsen (12) der Länge nach durch optische Trennvorrichtungen (13) seitlich voneinander getrennt sind, damit die Beleuchtung einer Leuchtreihe (2, 3, 4) nicht die Pixel anderer Leuchtreihen stören kann.

5. Vorrichtung nach einem der vorhergehenden Ansprüche, **dadurch gekennzeichnet, dass** die Zylinderlinsen (12) an die optische Schaltanordnung (15) angebaut sind.

6. Vorrichtung nach einem der vorhergehenden Ansprüche 1 bis 4, **dadurch gekennzeichnet, dass** die Zylinderlinsen (12) durch einen Luftspalt der optischen Schaltanordnung (15) getrennt sind.

7. Vorrichtung nach einem der vorhergehenden Ansprüche, **dadurch gekennzeichnet, dass** die transparente oder halbtransparente Elektrode eine Schicht aus Indium-Zinn-Oxid (ITO) umfasst.

8. Vorrichtung nach Anspruch 7, **dadurch gekennzeichnet, dass** die transparente oder halbtransparente Elektrode eine Schicht aus Chrom umfasst.

9. Verfahren zum Umsetzen einer Vorrichtung nach einem der Ansprüche 1 bis 8, wobei die Anzeigefarbe für den Betrachter durch die elektrooptische Schaltanordnung (15) gesteuert wird, und wobei es mindestens drei Leuchtreihen (2, 3, 4) der Gruppe ermöglichen, durch optische Kombination für einen Betrachter eine weiße Farbe zu erzeugen, wobei man gleichzeitig mindestens drei Leuchtreihen (2, 3, 4) einschaltet und den Weißabgleich mindestens durch Steuerung der jeweiligen Leuchtstärken der Grundfarben, die gleichzeitig durch die Leuchtreihen (2, 3, 4) erzeugt werden, anpasst.

## Claims

1. A colour display device including, from back to front, towards a viewer, a multicolour backlight unit (1) based on organic light-emitting diodes OLED, an electro-optical switching assembly (15) based on pixels, switching the backlighting provided by the backlight unit (1), the backlight unit (1) being a surface including a periodic pattern of a group of at least three luminous lines (2, 3, 4) of organic light-emitting diodes OLED of different basic colours, adjacent and parallel to each other, and
wherein the pixels of the electro-optical switching assembly (15) intended to switch a same basic colour and the luminous lines (2, 3, 4) of the backlight unit (1) of said same basic colour are substantially aligned so that any given pixel allows to control the forward transmission of the single corresponding basic colour, and
wherein a cylindrical lens (12) is arranged along each luminous line (2, 3, 4) on the backlight unit so as to form a light beam (14) with substantially parallel edges directed towards the front and through the electro-optical switching assembly (15) for the basic colour of the corresponding luminous line (2, 3, 4), the cylindrical lens (12) having a length substantially equal to the length of the luminous line (2, 3, 4),
wherein the luminous lines (2, 3, 4) of organic light-emitting diodes OLED include towards the front a transparent or semi-transparent electrode of a first kind through which passes the light produced and towards the back an electrode of a second kind (11), the electrode kinds corresponding to anode and cathode, and
wherein the electrodes of one kind of the luminous lines (2, 3, 4) of a same basic colour, called the line electrodes, are connected to each other (5, 6, 7) and to at least one pair of colour-control connections (8, 9, 10) for the corresponding basic colour, and
wherein the electrodes of the other kind for the whole luminous lines (2, 3, 4) are connected together, forming a common electrode, and to at least one common control connection, and
wherein the device includes said at least one pair of colour-control connections per basic colour, the first colour-control connection of the pair being at a first end of the line electrodes of the corresponding basic colour and the second colour-control connection of the pair being at a second end of the same line electrodes of the corresponding basic colour, the second end being at the opposite of the first end along the luminous lines, the line electrodes of a same basic colour being connected to each other at each of the two ends of the luminous lines (2, 3, 4).

2. The device according to claim 1, **characterized in that** it includes, towards the front of the electro-optical switching assembly (15) et towards the viewer a substantially planar scattering element and **in that** the scattering element and the surface gathering the luminous lines (2, 3, 4) of the backlight unit (1), which is substantially planar, are optically conjugated through said cylindrical lenses (12).

3. The device according to claim 1 or 2, **characterized in that** the electro-optical switching assembly (15) is based on an active matrix.

4. The device according to any one of the preceding claims, **characterized in that** the cylindrical lenses (12) are laterally separated from each other over the length by optical splitters (13) so that the lighting of one luminous line (2, 3, 4) cannot interfere with pixels of other luminous lines.

5. The device according to any one of the preceding claims, **characterized in that** the cylindrical lenses (12) are attached to the optical switching assembly (15).

6. The device according to any one of claims 1 to 4, **characterized in that** the cylindrical lenses (12) are separated by an air gap of the optical switching assembly (15).

7. The device according to any one of the preceding claims, **characterized in that** the transparent or semi-transparent electrode comprises a layer of indium-tin oxide (ITO).

8. The device according to claim 7, **characterized in that** the transparent or semi-transparent electrode comprises a layer of chromium.

9. A method of implementation of a device according to any one of claims 1 to 8, according to which
the colour of display for the viewer is controlled by the electro-optical switching assembly (15) and according to which at least three luminous lines (2, 3, 4) of the group allow to produce by optical combination for a viewer a white colour, said at least three luminous lines (2, 3, 4) are lighted simultaneously, and the white-balance is adjusted at least by control of the respective luminous intensities of the basic colours produced simultaneously by the luminous lines (2, 3,4).
